Europäisches Patentamt

**European Patent Office**

**Office européen des brevets**

(11) Veröffentlichungsnummer: **0 142 714**

**A2**

# EUROPÄISCHE PATENTANMELDUNG

(21) Anmeldenummer: **84112510.7**

(22) Anmeldetag: **17.10.84**

(51) Int. Cl.⁴: **C 04 B 40/00**
**C 04 B 22/00**

(30) Priorität: **11.11.83 HU 387283**

(43) Veröffentlichungstag der Anmeldung:
**29.05.85 Patentblatt 85/22**

(84) Benannte Vertragsstaaten:
**AT BE CH DE FR GB IT LI LU NL SE**

(71) Anmelder: **Nyugatmagyarorszagi Fagazdasagi**
**Kombinat**
**Zanati u. 26**
**H-9700 Szombathely(HU)**

(72) Erfinder: **Schmidt, Ernó, Dr. Dipl.-Ing.**
**Kárpáti K. ut 21**
**H-9700 Szombathely(HU)**

(74) Vertreter: **Brommer, Hans Joachim, Dr.-Ing. et al,**
**Patentanwälte Dipl.-Ing. R. Lemcke Dr.-Ing. H.J.**
**Brommer Amalienstrasse 28 Postfach 4026**
**D-7500 Karlsruhe 1(DE)**

(54) Verfahren zum beschleunigten Erhärten des Zementes bei der Herstellung von aus organischem oder unorganischem Faserstoff bestehenden und mit Portlandzement verklebten Platten und Profilen.

(57) Die Erfindung betrifft ein Verfahren zum beschleunigten Erhärten von aus Faserstoff und Zement bestehenden Bauteilen, bei dem das zur Karbonisation erforderlich $CO_2$ in Form von Trockeneis zugegeben wird.

EP 0 142 714 A2

Bei der Fertigungstechnologie der aus faserigen Stoffen mit Portlandzement als Bindematerial verfertigten Platten und Profilen stellt die Erhärtung des
Zements eine wichtige Phase dar.

Der Erhärtung des Zementes vorangehend werden
der Faserstoff, der zum Verkleben erforderliche Zement,
Hydratationswasser und verschiedene Chemikalien (Beschleuniger usw. ) nach einer genauen Rezeptur dosiert und vermischt. Das derweise entstandene zementhaltige faserige
Gemisch wird entweder mechanisiert oder mit der Hand in
Formen gestreut bzw. zwecks Herstellung einer Platte von
bestimmtem Mass teppichartig ausgebreitet. Die Menge des
dem Fasermaterial beigemengten Wassers und Zementes, sowie
Grundstoff und Form der Faser üben eine bedeutenden Einfluss auf die Eigenschaften der Zementhaltigen Fasermasse
aus. Werden Zement und Wasser in einer grösseren Menge
den Fasern zugegeben, entsteht eine plastische Fasermasse,
wogegen die Zugabe einer geringeren Menge ein Gemisch
mit lockerer Struktur ergibt. In einer Phase des Fertigungsprozesses wird das Gemisch mit der lockeren Struktur auf
das gewünschte Mass gepresst und solange in zusammengedrücktem Zustand gehalten, bis der Zement dermassen sich
erhärtet, dass er das endgültige Mass zu behalten fähig
ist. Um diesen Zustand erreichen zu können - auch bei
einer Wärmebehandlung des Zementes und unter Zugabe eines
Beschleunigers - ist eine Zeitspanne von 6 bis 12 Stunden
erforderlich. Während dieser langen Abbindezeit findet die Erhärtung im allgemeinen diskontinuierlich statt,
d.h. der zementgebundene Faserstoff wird bis zum Zeitpunkt
der Entschalung in einem auf Mass gepressten Zustand gehalten.

In der Betonproduktion ist die Erhärtung des
Zementes durch einen karbonisierenden Prozess wohlbekannt.
Im Laufe der Karbonisierung wird nämlich ein Teil des in
dem Zement in einem bedeutenden Anteil (50-60 %) vorhandenen CaO durch Zuführung von Kohlendioxydgases in Kalkstein ($CaCO_3$) umgewandelt. Diese chemische Reaktion läuft
recht schnell ab. Unter günstigen Verhältnissen, insbesondere bei der geeigneten Verdichtung des Zements und
des Zuschlagstoffes besteht zwischen den entstehenden
Kalziumkarbonatmolekülen eine so starke Verbindung, dass
die Betonfestigkeit in 5 bis 30 Minuten die 20 bis 25 %
der Festigkeit im Alter von 28 Tagen erreichen kann, trotzdem, dass eventuell der Hydratationsprozess nicht einmal
begann. Dieser Karbonisationsprozess kann erfolgreich
bei der Herstellung von aus faserigen Materialien und
Zement als Klebestoff bestehenden Produkten verwendet
werden.

Nach Daten der Fachliteratur werden im Laufe
des Karbonisationsprozesses etwa 20 % des CaO-Gehalts des Zements in Kalkstein umgewandelt, während 80 % an der
Hydratationsbindung teilnehmen. Bei den aus pflanzlichen
Faserstoffen mit Zement als Klebematerial beträgt im allgemeinen das Gewichtsverhältnis Faser:Zement 1:1 - 1:4,
während das volumetrische Verhältnis im Bereich zwischen
1: 0,25 und 1:1 liegt. Werden nicht pflanzliche Fasern
verwendet, ändern sich die Verhältnisse nach dem Raumgewicht der Faser.

Nehmen wir ein Beispiel aus dem Fertigungskreis
der zementgebundenen Holzspäneplatte: zu 1 m$^3$ Fertigprodukt nimmt man 300 kg absolut trockenes Holz und 700 kg
Portlandzement. Kalkuliert man mit einem 60 %-igen Gehalt
und CaO, so können 12 % des Zementgewichtes durch Karbonisation in Kalkstein umgewandelt werden. Nach dem Molverhältnis berechnet, müssen 9,3 bis 10 % des Zementgewichtes
- in unserem Beispiel 70 kg Kohlendioxyd - im Laufe der
Karbonisation zugegeben werden um 1 m$^3$ Zement-Holzspäneplatte erhalten zu können. Normales Raumgewicht von 70 kg
Kohlendioxyd beträgt rund 35 m$^3$.

Die zu 1 m$^3$ Zement-Holzspäneplatte erforderlichen
35 m$^3$ Kohlendioxydgas können nur unter Anwendung komplizierter und kostaufwendiger Methoden zugegen werden.

Das Wesentliche unserer Erfindung besteht darin,
dass die 70 kg Kohlendioxyd laut unseres Beispiels nicht
als Gas, sondern als Feststoff der zementhaltigen Fasermasse
eingeführt werden. Festes Kohlendioxyd, unter dem Namen "Trockeneis" bekannt, kann mit der Fasermasse zusammen
verdichtet werden, ja sogar auf ein Raumgewicht von 1,4 kp/dm$^3$,
wodurch seine Anwesenheit in dem Inneren des Gemisches
praktisch vernachlässigbar ist. In unserem Beispiel nimmt
das Trockeneis im Rauminhalt des Produktes etwa 5 bis 6 %
ein.

Als erste Phase der Realisierung der Erfindung
wird in den zementhaltigen Faserstoff gleichmässig Trockeneis in der gewünschten Menge eingeführt. Dieser Arbeitsgang kann auf zweierlei Weisen durchgeführt werden:
und zwar
- zunächst wird das Trockeneis erzeugt und es wird der
  zementhaltigen Fasermasse zugemischt, oder
- man führt flüssiges Kohlendioxyd in den Faserstoff,
  wobei das flüssige Kohlendioxyd in der lockeren Fasermasse expandiert und das Trockeneis entsteht.

Auf jedwelche Weise das Kohlendioxyd in die
zementhaltige Fasermasse eingeführt wird, muss das lockere
Material binnen Sekunden auf das endgültige Fertigungsmass zusammengepresst werden.

Sublimation des festen Kohlendioxyds erfordert
Wärmezufuhr. Obzwar die Enthalpie der Fasermasse und
exotherme Reaktionswärme des Karbonisationsprozesses gemeinsam einen höheren Wert ergeben, als die zur Sublimation des Trockeneises erforderliche Wärme, ist eine zusätzliche Wärmezufuhr zur Beschleunigung der Sublimation
und zur Begünstigung der der Karbonisation folgenden Hydratation unerlässlich.

Der Takt der Wärmezufuhr bestimmt einerseits
die Geschwindigkeit der Sublimation des Trockeneises,
andererseits den in dem Inneren der Fasermasse herrschenden
Druck und dadurch die Ausbreitung des Kohlendioxyds. Damit ein Gleichgewichtszustand des Prozesses erreicht werden könne, müssen die Geschwindigkeit der Sublimation
und Reaktion des Kohlendioxyds aufeinander abgestimmt
werden.

Nach Beendigung der Karbonisation wird die zementgebundene Fasermasse so fest sein, dass der Pressdruck
aufgehoben werden kann. Nach unseren Erfahrungen erreicht
eine 10 mm dicke Platte in 6 bis 8 Minuten, eine 20 mm
dicke Platte in 20 bis 25 Minuten 30 % der Festigkeit im
Alter von 28 Tagen. Die endgültige Verfestigung endet
sich mit dem Hydratationsprozesses.

Die Temperatur des Trockeneises beträgt - 79$^\circ$C.
Diese niedrige Temperatur ruft bei der Zementhydratation
keine Störungen hervor, da die Fertigungstechnologie erlaubt es die Behandlung mit Kohlendioxyd dem Beginn der
Abbindezeit des Zementes vorzunehmen. Das Einfrieren des
Hydratationswassers hat in dieser Phase noch keine Folgen.

Ein grosser Vorteil des geschilderten Verfahrens
besteht darin, dass durch die Anwendung der Erfindung sowohl in einer diskontinuierlichen, wie auch in einer kontinuierlichen Betriebsweise ein Profil oder ein plattenförmiges Produkt hergestellt werden kann.

0142714

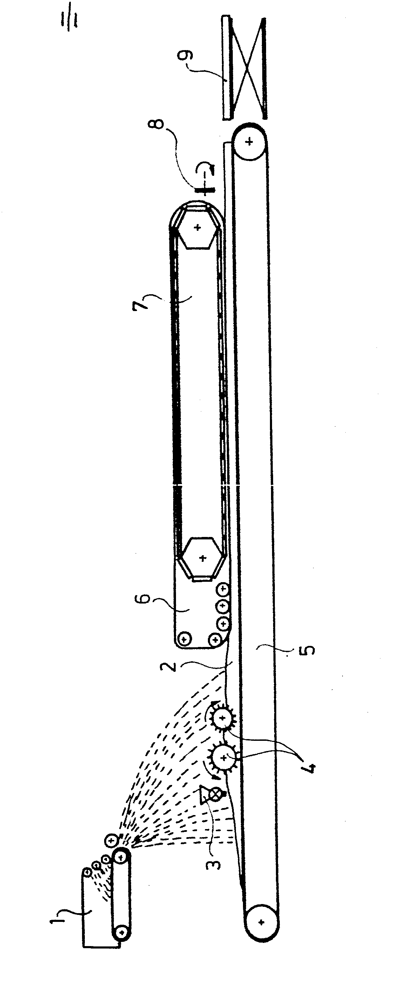

Die beiliegende Figur stellt das Prinzip der
kontinuierlichen Betriebsweise dar.

Die Spreadingmaschine (1) streut die zementhaltige Fasermasse auf das endlose, sich kontinuierlich
bewegende Band (5). Auf das sich unter der Spreadingmaschine kontinuierlich aufbauende lockere Fasermaterial (2)
wird Trockeneis mit Hilfe eines Dosierzylinders (3) mit
Drehzellen aufgegeben. Ein Zylinderpaar (4) mischt das
Trockeneis dem zementhaltigen Fasermaterial zu. Das das
Trockeneis enthaltende Material gelangt binnen Kurzem in
die Strangpresse (6), wo es auf das endgültige Dickenmass
verdichtet wird. Die zur Sublimation des Trockeneises
erforderliche Wärme übergibt die endlose aus Stahlplatten
bestehende Strangpresse (7) dem zementhaltigen Fasermaterial. Am Ende der Presse wird die Platte entsprechender
Festigkeit mit einer Diagonalsäge (8) zerstückelt und so
gelagert.

Patentansprüche
================

1. Verfahren zum beschleunigten Erhärten von
aus Faserstoff und Portlandzement, als Klebestoff bestehenden Platten und Profilen durch Karbonisation,
dadurch gekennzeichnet, dass das zur Karbonisation
erforderliche Kohlendioxyd in festem Zustand, in Form
von Trockeneis dem zementhaltigen Faserstoff zugegeben
wird.

2. Verfahren nach Anspruch 1, dadurch gekennzeichnet,
dass zur Sublimation des Trockeneises der zementhaltige
Faserstoff erwärmt wird.

3. Verfahren nach Anspruch 1 und 2, dadurch gekennzeichnet,
dass die einzelnen Arbeitsphasen sowohl in einer diskontinuierlichen, wie auch in einer kontinuierlichen Betriebsweise durchgeführt werden können.